# EUROPÄISCHE PATENTSCHRIFT

(11) **EP 2 052 900 B1**
(45) Veröffentlichungstag und Bekanntmachung des Hinweises auf die Patenterteilung: **12.10.2011**
(21) Anmeldenummer: 08165502.9
(22) Anmeldetag: 30.09.2008
(51) Int. Cl.: B60K 17/28, B60K 17/26

(54) **Getriebeanordnung**
Gearbox assembly
Agencement d'engrenage

(30) Priorität: 26.10.2007 DE 102007051244
(43) Veröffentlichungstag der Anmeldung: 29.04.2009
(73) Patentinhaber: Deere & Company, Moline, IL 61265-8098 (US)
(72) Erfinder: Vergara, Daniel, 28095 Madrid (ES)
(74) Vertreter: Holst, Sönke

(56) Entgegenhaltungen:
- EP-A2- 1 186 458
- EP-A2- 1 245 426
- FR-A1- 2 899 157
- GB-A- 2 278 897

## Beschreibung

Die Erfindung betrifft eine Getriebeanordnung, insbesondere für ein Zapfwellengetriebe, mit einem Getriebegehäuse, einer Abtriebswelle zum Antreiben eines Gerätes, einer Antriebskomponente zum Antreiben der Abtriebswelle, einer zwischen der Abtriebswelle und Antriebskomponente angeordneten Kupplung zur Übertragung eines Drehmoments, einer Bremseinrichtung zum Blockieren der Abtriebswelle gegenüber dem Getriebegehäuse, einem auf der Abtriebswelle axial verschiebbar gelagerten Ringkolben, durch den in einer ersten Stellung die Kupplung und in einer zweiten Stellung die Bremseinrichtung betätigbar ist, und einer Freilaufeinrichtung, die es ermöglicht, dass die Abtriebswelle in ihrem blockierten Zustand über einen begrenzten Teil ihres Umfangs drehbar ist.

Es sind Getriebeanordnungen bekannt, die eine Abtriebswelle umfassen, die mittels einer Bremseinrichtung blockierbar ist. Derartige Getriebeanordnungen werden beispielsweise für Zapfwellengetriebe an landwirtschaftlichen Schleppern verwendet, wobei die Abtriebswelle eine sogenannte Zapfwelle (oder Power Take Off (PTO)) darstellt, über die ein an den Schlepper angehängtes Gerät betreibbar ist. Das Anschließen eines Gerätes an die Zapfwelle darf aus Sicherheitsgründen nur bei blockierter Zapfwelle durchgeführt werden. Nun deckt sich die Verzahnung an der Zapfwelle oftmals nicht mit der Innenverzahnung am anzuschließenden Gerät, so dass ein Verdrehen der Zapfwelle notwendig ist, um das Gerät anschließen zu können. Durch eine Freilaufeinrichtung wird gewährleistet, dass die Zapfwelle bis zu einem gewissen Maß auch in ihrem blockierten Zustand verdrehbar ist, um das Anschließen des Gerätes an die Zapfwelle zu vereinfachen. Derartige Freilaufeinrichtungen werden im Stand der Technik durch Freilaufkugeln realisiert, die einen Axialschluss zwischen Abtriebswelle und der Bremseinrichtung bilden und die jeweils in axialen ringabschnittförmigen Vertiefungen oder axial ausgebildeten ringabschnittförmigen Laufrinnen gelagert sind, wobei sich die Vertiefungen nur über einen bestimmten Abschnitt des Abtriebswellenumfangs erstrecken, beispielsweise über insgesamt 60° des Umfangs. Hierbei sind, jeweils konzentrisch zur Abtriebswelle, eine ringabschnittförmige Vertiefung an einer Getriebegehäusewand über einen Umfangsabschnitt von 30° und eine gegenüber liegende ringabschnittförmige Vertiefung auf einer mit der Bremseinrichtung für die Abtriebswelle verbundenen Bremsscheibe über einen Umfangsabschnitt von weiteren 30° ausgebildet, so dass die Freilaufkugeln je durch zwei axial ausgebildete ringabschnittförmige und sich gegenüber liegende Vertiefungen oder Laufrinnen umschlossen werden und die Bremsscheibe axial fixiert und radial beweglich gelagert ist. Wird die Bremsscheibe nun gebremst bzw. blockiert, dann kann die Bremsscheibe, welche mit der Abtriebswelle verbunden ist, im Rahmen dessen, wie die Freilaufkugeln innerhalb der Vertiefungen bzw. Laufrinnen abwälzen, weiterhin verdreht werden. Gelangt eine der Freilaufkugeln an ein Ende einer Vertiefung bzw. Laufrinne, so ist das maximale Freilaufmaß (60° des Abtriebswellenumfangs) erreicht und die Bremsscheibe blockiert in eine Richtung. Die Bremsscheibe kann dann in entgegen gesetzte Richtung verdreht werden (maximal um 60° des Abtriebswellenumfangs), bis die Freilaufkugeln an das gegenüberliegende Ende der Vertiefung bzw. Laufrinne gelangen. Während des Bremsvorgangs wird die Bremsscheibe axial belastet und tritt mit einem Bremskörper in Eingriff. Die dabei aufzubringende Axialkraft wird durch die Freilaufkugeln aufgenommen bzw. durch diese auf die Gehäusewand bzw. auf die Bremseinrichtung übertragen. Die Kraftübertragung kann dabei aufgrund der Kugelgeometrie nur punktförmig erfolgen, was zu Spannungsspitzen und ungünstigen Kräfteverteilungen und schließlich zu Verschleißerscheinungen an Kugeln und Vertiefungen bzw. Laufrinnen oder zu Schäden an der Getriebeanordnung führen kann. Ferner ist eine derartige Freilaufeinrichtung kompliziert aufgebaut und aufgrund der benötigten Teilevielfalt kostenintensiv. Das Dokument FR 2 899 157 offenbart die vorkennzeichnenden Merkmale des Anspruchs 1.

Die der Erfindung zugrunde liegende Aufgabe wird darin gesehen, eine Getriebeanordnung der eingangs genannten Art anzugeben, durch welche einige oder alle der vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Getriebeanordnung der eingangs genannten Art mit einer Freilaufeinrichtung versehen, die wenigstens ein radial zur Abtriebswelle zwischen der Abtriebswelle und dem Ringkolben angeordnetes Freilaufelement umfasst, welches fest mit der Abtriebswelle oder dem Ringkolben verbunden ist und sich radial in wenigstens eine an dem Ringkolben bzw. an der Antriebswelle ausgebildete und sich über einen begrenzten Teil des Umfangs ausdehnende Aussparung erstreckt. Dadurch, dass das wenigstens eine Freilaufelement sich radial in die wenigstens eine ausgebildete Aussparung erstreckt, wird unabhängig von den auf die Bremseinrichtung ausgeübten Axialkräfte ein Radialschluss zwischen Abtriebswelle und Ringkolben gebildet, so dass die auf die Bremseinrichtung ausgeübten Axialkräfte nicht durch die Freilaufeinrichtung übertragen werden. Ferner kann das wenigstens eine Freilaufelement von der Geometrie einer Kugel abweichend ausgebildet sein, so dass auch bei der Übertragung von Radialkräften ungünstige Spannungsspitzen vermieden werden können. Der Verschleiß der Freilaufeinrichtung bzw. der Bremseinrichtung wird aufgrund der günstigeren Spannungsverhältnisse maßgeblich reduziert. Die feste Montage des wenigstens einen Freilaufelements an die Abtriebswelle bzw. an den Ringkolben erleichtert den Zusammenbau der Getriebeanordnung und ermöglicht eine ökonomische Vormontage der Abtriebswelle. Ferner ist der Herstellungsprozess nicht durch aufwändiges Einbringen bzw. Ausbilden von Laufrinnen mit sphärisch gewölbter Oberfläche behaftet, wodurch eine Kostenersparnis erzielt wird.

Vorzugsweise wird das wenigstens eine Freilaufelement als Scheibe ausgebildet, wobei ein Teil der Scheibe radial in die Aussparung hineinragt und ein Teil der Scheibe fest mit der Abtriebswelle oder dem Ringkolben verbunden ist. Die Scheibe kann beispielsweise mittels einer entsprechenden Aussparung in einer Presspassung mit der Antriebswelle oder dem Ringkolben verbunden sein, wobei ein Teil des Scheibenumfangs radial über den Außenumfang der Abtriebswelle bzw. dem Innenumfang des Ringkolbens übersteht und in die am Ringkolben bzw. an der Abtriebswelle ausgebildete Aussparung hineinragt. Die an der Abtriebswelle bzw. dem Ringkolben ausgebildete Aussparung wird vorzugsweise durch eine ringförmige Nut in Form einer radialen Vertiefung hergestellt, die über einen Teil des Umfangs, beispielsweise über 60°, eingebracht wird. Durch die Geometrie einer Scheibe, die einen Querschnitt von eckiger Kontur aufweist, ist es nicht erforderlich aufwändige sphärische Oberflächen auszubilden, sondern es eignen sich Vertiefungen mit Querschnitten von eckiger Kontur. Dadurch, dass das Freilaufelement als Scheibe ausgebildet ist, wird eine Kraftübertragung entlang einer Kontaktlinie, und damit eine bessere Spannungsverteilung als bei einer punktförmigen Übertragung, erzielt. Die Kontaktlinie kann dabei durch die Stärke der Scheibe variiert werden. An Stelle der Scheibe kann auch eine andere Geometrie des Freilaufelements gewählt werden. Beispielsweise kann auch ein Stift oder Bolzen als Freilaufelement eingesetzt werden, der zylindrisch oder kubisch ausgebildet in entsprechende Aussparungen eingepasst wird. Aus funktioneller Sicht ist es auch denkbar eine Kugel als Freilaufelement einzusetzen.

Vorzugsweise sind wenigstens drei Freilaufelemente auf dem Außenumfang der Abtriebswelle verteilt und entsprechend drei auf einem Innenumfang des Ringkolbens ausgebildete Hohlräume angeordnet. Dadurch wird eine gleichmäßige Kräfteverteilung auf den gesamten Umfang erzielt. Es können selbstverständlich auch mehr oder weniger als drei Freilaufelemente bzw. Hohlräume vorgesehen werden. Für einen Freilauf von 60° Umfang sind die die Hohlräume ausbildenden Vertiefungen über einen Umfangswinkel von 60° ausgeformt. Für einen Freilauf von 40° oder 70° müssten sich die Vertiefungen entsprechend über 40° bzw. 70° erstrecken. Entsprechende Freilaufanordnungen mit einem anderen (größeren oder kleineren) Umfangswinkel sind selbstverständlich auch realisierbar.

Vorzugsweise ist der Ringkolben als Bremskolben ausgebildet und zwar derart, dass er in einer Bremsstellung mit einem mit dem Getriebegehäuse verbundenen Bremselement in Eingriff bringbar ist, so dass die Abtriebswelle gegenüber dem Getriebegehäuse blockierbar ist. Am Ringkolben kann dazu eine Art Bremsfläche in Form eines ringförmigen Bremsbelags ausgebildet sein, der gegen einen Bremskörper gedrückt wird, der ebenfalls einen als Ringfläche ausgebildeten Bremsbelag aufweist und mit dem Getriebegehäuse verbundenen ist. Der Bremskörper kann dabei direkt an einem Teil des Getriebegehäuses, beispielsweise an einer Getriebegehäusewand ausgebildet sein oder andersartig als Bauteil fest mit dem Getriebegehäuse verbunden sein, so dass der Ringkolben axial in Richtung dieser Getriebegehäusewand verschoben wird, um mit dem Bremskörper bremsend in Eingriff zu treten. Dabei wird die Abtriebswelle gegenüber der Getriebegehäusewand abgebremst und blockiert. Es ist denkbar auch andere Ausbildungen an Ringkolben und Getriebegehäuse vorzusehen, die eine Bremswirkung auf die Abtriebswelle ausüben. So kann auch eine radial wirkende Backenbremse eingesetzt werden, die beispielsweise an einer außen am Ringkolben aufgebrachten Bremsfläche wirkt. Auch andere Arten von Bremsen sind denkbar, die eine Rotationsbewegung des Ringkolbens abbremsen bzw. diesen blockieren.

Vorzugsweise ist der Ringkolben als Kupplungskolben ausgebildet, derart, dass er in einer Kupplungsstellung mit einem mit der Kupplung verbundenen Kupplungselement in Eingriff bringbar ist, so dass die Abtriebswelle mit der Antriebskomponente koppelbar ist. Dazu kann auf der dem Bremsbelag entgegen gesetzten Seite des Ringkolbens ein Kranz, Kragen, Absatz oder Vorsprung ausgebildet sein, der beispielsweise mit Lamellenscheiben einer Lamellenkupplung in Eingriff tritt. Durch axiale Bewegung des Ringkolbens (entgegen einer axialen Bewegung des Ringkolbens für einen Bremsvorgang) werden dann die Lamellenscheiben zusammengedrückt und ein Kupplungsmoment bzw. Antriebsmoment von der Antriebskomponente auf die Abtriebswelle übertragen.

Es können vielerlei Arten von Kupplungen eingesetzt werden, wobei ein Koppelvorgang durch axiale Bewegung des Ringkolbens ausgelöst wird.

Vorzugsweise ist zwischen Ringkolben und Abtriebswelle wenigstens ein Federelement angeordnet, durch welches der Ringkolben gegen das Bremselement vorgespannt ist. Dadurch wird gewährleistet, dass wenn keine Axialkraft zur Bewegung des Ringkolbens in eine Kuppelstellung aufgebracht wird, der Ringkolben stets in Bremsstellung verbleibt bzw. die Abtriebswelle stets gebremst bzw. blockiert ist. Als Federelement eignen sich insbesondere Tellerfedern oder Scheibenfedern, die zwischen einem Absatz der Abtriebswelle und einem Absatz am Ringkolben angeordnet sind. Es können jedoch auch über den Umfang verteilte Schrauben- oder Spiralfedern eingesetzt werden, die die erforderliche Federkraft aufbringen und den Ringkolben in Bremsstellung halten.

Vorzugsweise ist an dem Ringkolben eine Hydraulikkammer ausgebildet, derart, dass durch Druckbeaufschlagung der Hydraulikkammer der Ringkolben axial verschiebbar ist und beispielsweise durch axiales Verschieben mit dem Kupplungselement in Eingriff tritt. Die Kammer wird vorzugsweise durch eine sich radial erstreckende erste Wand, die beispielsweise durch eine auf der Abtriebswelle axial fixierte Scheibe gebildet wird, durch eine sich radial erstreckende zweite Wand, die vorzugsweise durch eine der ersten Wand gegenüberliegende Stirnfläche des Ringkolbens gebildet wird, und durch sich axial erstreckende radiale Begrenzungen durch die Abtriebswelle und den Ringkolben oder der Scheibe ausgebildet. Ein Befüllen der Kammer bewirkt, dass sich die erste Wand von der zweiten Wand axial entfernt bzw. sich der Ringkolben axial von der Scheibe wegbewegt. Gleichzeitig kann dadurch das Federelement zusammengedrückt und der Ringkolben aus seiner Bremsstellung in die Kupplungsstellung gerückt werden. Hierbei ist auch eine Zwischenstellung möglich, wenn nämlich die Hydraulikkammer nur so befüllt wird, dass die Bremsstellung verlassen (Federelement wird leicht zusammengedrückt) aber die Kuppelstellung noch nicht erreicht wird (Lamellenscheiben werden noch nicht zusammengedrückt).

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Teilquerschnittsansicht einer erfindungsgemäßen Getriebeanordnung,
- Fig. 2: eine erste Seitenansicht als Explosionszeichnung der Abtriebswelle aus Figur 1 mit Freilaufelementen und
- Fig. 3: eine zweite Seitenansicht als Explosionszeichnung der Abtriebswelle aus Figur 1 mit Freilaufelementen und Ringkolben.

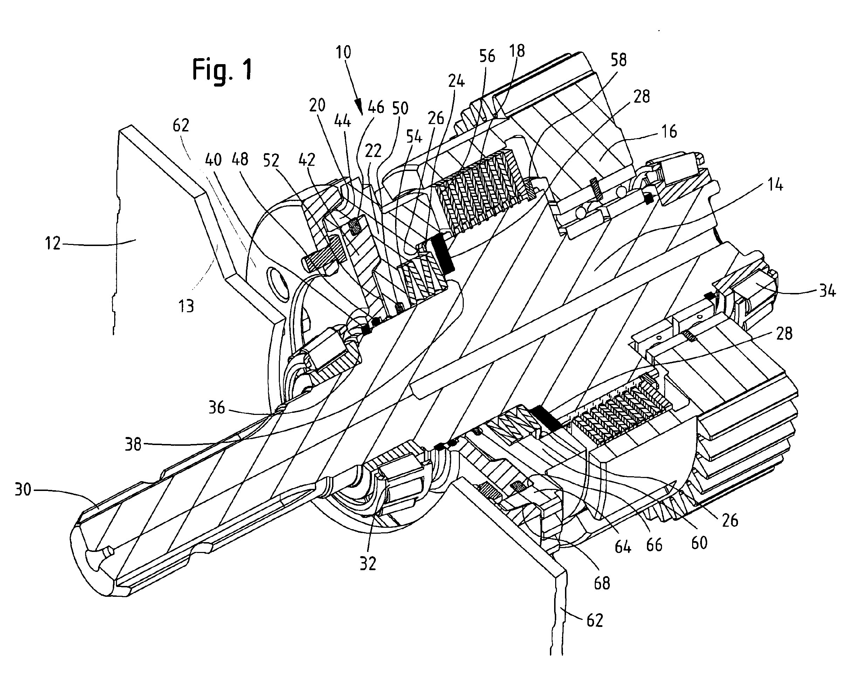

Eine in Figur 1 dargestellte Getriebeanordnung 10 für ein Zapfwellengetriebe beispielsweise eines landwirtschaftlichen Schleppers, umfasst ein Getriebegehäuse 12 mit einer Getriebegehäusewand 13, eine als Zapfwelle ausgebildete Abtriebswelle 14, eine als Zahnradwelle ausgebildete Antriebskomponente 16, eine zwischen der Abtriebswelle 14 und der Antriebskomponente 16 angeordnete Kupplung 18, eine Bremseinrichtung 20 und einen zwischen Kupplung 18 und Bremseinrichtung 20 angeordneten Ringkolben 22.

Der Ringkolben ist axial verschiebbar auf der Abtriebswelle gelagert und über eine Freilaufeinrichtung 24 drehfest mit der Abtriebswelle 14 verbunden. Der Ringkolben 22 dient somit als Drehmomentübertragung zwischen Abtriebswelle 14 und Antriebselement 16 sowie zwischen Abtriebswelle 14 und Bremseinrichtung 20, wie später im Einzelnen erläutert wird.

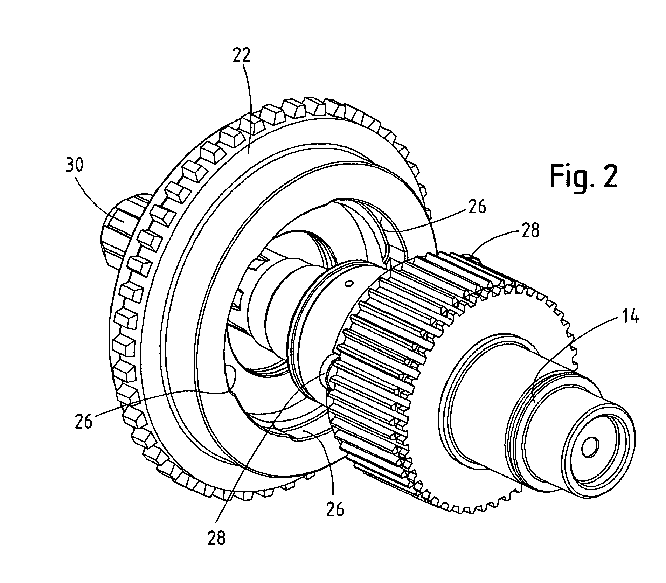

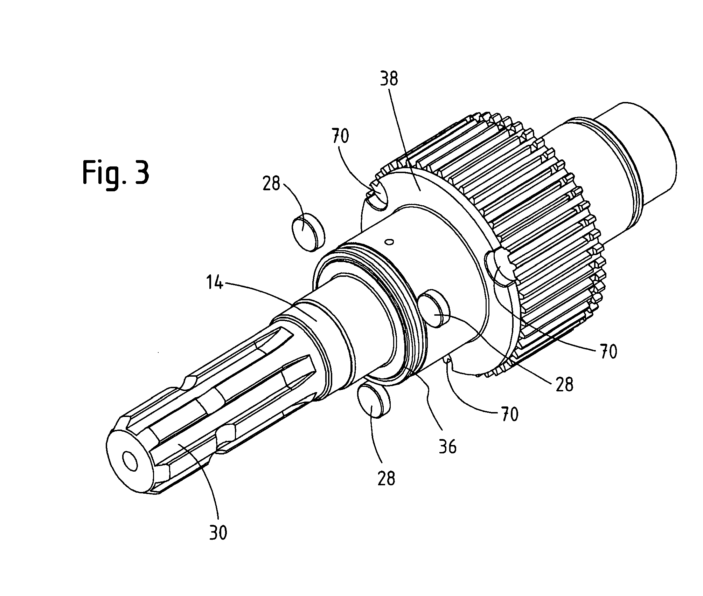

Die Freilaufeinrichtung 24 ist durch am Ringkolben 22 ausgebildete Aussparungen 26 und durch an der Abtriebswelle 14 befestigte Freilaufelemente 28 ausgebildet, wie besonders gut in den Figuren 2 und 3 zu erkennen ist. Die Drehmomentübertragung zwischen dem Ringkolben 22 und der Abtriebswelle erfolgt, sobald die Freilaufelemente 28 an eines der Enden der Aussparungen 26 gelangen und den Ringkolben 22 in Umfangsrichtung bzw. in Umdrehungsrichtung der Abtriebswelle 14 mitnehmen.

Die als Zapfwelle ausgebildete Abtriebswelle 14 weist an ihrem freiliegenden Ende eine Verzahnung 30 zum Antreiben eines Anbau- oder Anhängegerätes (nicht gezeigt) auf. Die Abtriebswelle 14 ist über ein erstes Lager 32 an der Getriebegehäusewand 13 gelagert. Ein zweites Lager 34 dient zur Lagerung der Abtriebswelle 14 innerhalb des Getriebegehäuses 12. Die Abtriebswelle ist mit einem ersten Absatz 36 und einem zweiten Absatz 38 versehen, wobei das erste Lager 32 an den ersten Absatz anliegend angeordnet ist.

Zwischen dem ersten und dem zweiten Absatz 36, 38 ist eine über einen Sicherungsring 40 axial gesicherte Scheibe 42 angeordnet, an die der auf der Abtriebswelle 14 axial verschiebbar gelagerte Ringkolben 22 angrenzt. An dem Ringkolben 22 ist ein sich axial in Richtung der Getriebegehäusewand 13 erstreckender Führungskranz 44 ausgebildet, der die Scheibe 42 radial umschließt und von dieser axial geführt wird. Zwischen dem Führungskranz 44 und der Scheibe 42 ist ein Dichtungsring 46 angeordnet, der die Scheibe 42 gegenüber dem Führungskranz 44 radial abdichtet. Zwischen der Abtriebswelle 14 und der Scheibe 42 ist ein weiterer Dichtungsring 48 angeordnet, der die Scheibe 42 gegenüber der Abtriebswelle 14 radial abdichtet. Die Scheibe 42 ist innerhalb des Führungskranzes 44 derart gelagert, dass sie eine axiale Relativbewegung gegenüber den Ringkolben 22 ausführen kann. Der Ringkolben 22 ist über einen weiteren Dichtungsring 50 gegenüber der Abtriebswelle 14 radial abgedichtet. Zwischen der Scheibe 42 und dem Ringkolben 22 ist eine Hydraulikkammer 52 ausgebildet, die durch eine dem Ringkolben 22 zugewandte Stirnfläche der Scheibe 42, durch eine der Scheibe 42 zugewandte Stirnfläche des Ringkolbens 22, durch die Umfangsfläche der Abtriebswelle 14 und durch die radial nach innen gerichtete Führungsfläche des Führungskranzes 44 begrenzt wird.

Wie in Figur 1 zu erkennen ist, ist der Ringkolben 22 zwischen der Scheibe 42 und dem zweiten Absatz 38 axial verschiebbar angeordnet. Zwischen dem Ringkolben 22 und dem zweiten Absatz 38 ist ein als Tellerfeder ausgebildetes Federelement 54 angeordnet, welches den Ringkolben 22 in Richtung der Scheibe 42 vorspannt bzw. den Ringkolben 22 gegen die Scheibe 42 drückt. Auf dem zweiten Absatz 38 sind Kupplungselemente 56 in Form von abtriebswellenseitigen und antriebskomponentenseitigen Lamellenscheiben angeordnet, die über einen Sicherungsring 58 axial auf der Abtriebswelle gesichert sind. An dem Ringkolben 22 ist ein sich axial in Richtung der Kupplungselemente 58 erstreckender Kranz 60 ausgebildet.

Die Bremseinrichtung 20 weist einen an die Getriebegehäusewand 13 befestigten Flansch 62 auf. Der Flansch 62 weist einen Bremskranz 64 auf, der eine radial nach außen gerichtete Seite des Führungskranzes 44 radial umschließt. An dem Bremskranz 64 ist eine radial nach innen gerichtete erste Bremsfläche 66 ausgebildet. Die radial nach außen gerichtete Seite des Führungskranzes 44 ist mit einer zweiten Bremsfläche 68 versehen. Beide Bremsflächen 66, 68 sind leicht konisch ausgebildet, so dass sich durch axiale Verschiebung des Ringkolbens 22 gegenüber dem Flansch 62 ein Reibschluss zwischen den Bremsflächen 66, 68 einstellt bzw. unterbrochen wird.

Wie in den Figuren 2 und 3 zu erkennen ist, sind die Freilaufelemente 28 als Scheiben ausgebildet, die über Ausnehmungen 70 an einer durch den zweiten Absatz 38 geformten Fläche 72 mit der Abtriebswelle 14 verbunden sind. Die Freilaufelemente 28 sind vorzugsweise fest in einem Presssitz in den Ausnehmungen 70 aufgenommen. Ein Teil der als Scheiben ausgebildeten Freilaufelemente 28 ragt radial über den Rand des zweiten Absatzes 38 hinaus, wobei die an dem Ringkolben 22 ausgebildeten Aussparungen 26 genau diesen Teil der Freilaufelemente 28 aufnehmen. Die Aussparungen sind dabei an der radial innen liegenden Seite des Kranzes 60 ausgeformt und bilden im montierten Zustand einen radial und in Umfangsrichtung der Abtriebswelle 14 begrenzten Hohlraum, wobei die über den Rand des zweiten Absatzes 38 hinausragenden Teile der Freilaufelemente 28 in den Hohlraum hineinragen. Die Aussparungen 26 sind über einen Umfang von 60° symmetrisch angeordnet, wobei drei Aussparungen 26 vorgesehen sind, in die sich jeweils ein Freilaufelement 28 erstreckt. Insgesamt sind also drei über den Umfang verteilte Freilaufelemente 28 angeordnet. Die Anzahl der Freilaufelemente 28 bzw. der Aussparungen 26 ist dabei variabel und in dem hier gezeigten Ausführungsbeispiel auf drei begrenzt. Am Ende einer jeden Aussparung 26 stoßen die Freilaufelemente 28 in Umfangsrichtung an die Wandung des Kranzes 60 so dass zwischen Ringkolben 22 und Abtriebswelle 14 ein Kraftschluss in Umfangsrichtung hergestellt wird. Je nach Kraftschlussrichtung kann so ein Antriebsmoment von der Antriebskomponente 16 oder ein Bremsmoment bzw. Blockiermoment von der Bremseinrichtung 22 auf die Abtriebswelle 14 übertragen werden.

Die Funktionsweise der Getriebeanordnung 10 und insbesondere die der Freilaufeinrichtung 24 wird nun im Folgenden beschrieben.

Durch Befüllen der Hydraulikkammer 52 wird der Ringkolben 22 in Richtung der Kupplung 18 bewegt, wobei der Ringkolben 22 durch die Ausbildung des Kranzes 60 auf der der Kupplung zugewandten Seite als Kupplungskolben ausgebildet ist. Auf der der Bremseinrichtung 20 zugewandten Seite, ist der Ringkolben 22 durch die Ausbildung des Bremskranzes 60 als Bremskolben ausgebildet. Je nach Betätigung des Ringkolbens 22 können drei verschiedene Betriebszustände eintreten, ein Bremszustand bzw. Blockierzustand, ein Kupplungszustand und ein Leerlaufzustand.

Der Bremszustand wird automatisch eingenommen, sobald die Hydraulikkammer druckentlastet wird. Durch die Vorspannkraft des Federelements 54 wird der Ringkolben 22 in Richtung der Bremseinrichtung 20 gedrückt, so dass die Bremsflächen 66, 68 in Reibschluss treten und den Ringkolben gegenüber dem Getriebegehäuse 12 abbremsen bzw. blockieren. In diesem Bremszustand ist der Ringkolben 22 und damit auch die drehfest mit dem Ringkolben 22 verbundene Abtriebswelle 14 blockiert. Wird die Hydraulikkammer 52 hingegen mit Hydraulikflüssigkeit befüllt bzw. druckbeaufschlagt, dann bewegt sich der Ringkolben 22 entgegen der Vorspannkraft des Federelements 54 in Richtung der Kupplung 18, so dass die Bremsflächen 66, 68 ihren Reibschluss auflösen. In diesem Zustand ist der Ringkolben 22 weder mit der Bremseinrichtung 20 noch mit der Kupplung 18 verbunden, so dass der Ringkolben 22 frei drehbar gelagert ist. Damit ist auch die Abtriebswelle frei drehbar und befindet sich in einem Leerlaufzustand. Dieser Leerlaufzustand wird verlassen, sobald der Ringkolben 22 durch weiteres Befüllen der Hydraulikkammer 52 bzw. durch weitere Druckbeaufschlagung weiter in Richtung der Kupplung 18 bewegt wird und der an dem Ringkolben 22 ausgebildete Kranz 60 mit den Kupplungselementen 56 in Eingriff tritt und diese zusammen drückt, so dass ein Kupplungsreibschluss zwischen den abtriebswellenseitigen und den antriebskomponentenseitigen Lammellenscheiben eintritt. In diesem Kupplungszustand können Drehmomente von der Antriebskomponente 16 auf die Abtriebswelle 14 übertragen werden.

Wie oben beschrieben, dient die Freilaufeinrichtung 24 zwar als Drehmoment übertragende Komponente zwischen dem Ringkolben 22 und der Antriebswelle 14. Sie kommt jedoch als Freilaufeinrichtung 24 im Bremszustand bzw. im blockierten Zustand der Abtriebswelle 14 zum Tragen. Der Ringkolben 22 ist in diesem Betriebszustand blockiert und bremst bzw. blockiert seinerseits über die Freilaufelemente 28, die an die Enden der Aussparungen 26 anstoßen, die Abtriebswelle 14. Die Abtriebswelle lässt sich jedoch im Rahmen der Aussparungen 26, bzw. im Rahmen dessen, wie sich die Freilaufelemente 28 in den durch die Aussparungen 26 gebildeten Hohlräumen bewegen können, verdrehen. So kann die Abtriebswelle 14 im vorliegenden Ausführungsbeispiel um 60° in eine Richtung verdreht werden, da sich die Aussparungen 26 über einen Umfangsabschnitt von 60° erstrecken und sich die Freilaufelemente 28 entsprechend über einen Verdrehwinkel von 60° frei bewegen können, bis sie ans entgegen gesetzte Ende einer Aussparung 26 stoßen und einen Kraftschluss herstellen bzw. blockieren. Gleichermaßen kann die Abtriebswelle 14 wieder in entgegen gesetzte Richtung um 60° verdreht werden, bis die Freilaufelemente 28 wieder gegen das andere Ende der Aussparungen 26 stoßen und einen Kraftschluss herstellen bzw. blockieren. Der Freilaufwinkel kann entsprechend der Ausbildung der Aussparungen 26 (hier 60° Umfangswinkel) variiert werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Getriebeanordnung (10), insbesondere für ein Zapfwellengetriebe, mit einem Getriebegehäuse (12), einer Abtriebswelle (14) zum Antreiben eines Gerätes, einer Antriebskomponente (16) zum Antreiben der Abtriebswelle (14), einer zwischen der Abtriebswelle (14) und Antriebskomponente (16) angeordneten Kupplung (18) zur Übertragung eines Drehmoments, einer Bremseinrichtung (20) zum Abbremsen bzw. Blockieren der Abtriebswelle (14) gegenüber dem Getriebegehäuse (12), einem auf der Abtriebswelle (14) axial verschiebbar gelagerten Ringkolben (22), durch den in einer ersten Stellung die Kupplung (18) und in einer zweiten Stellung die Bremseinrichtung (20) betätigbar ist, und einer Freilaufeinrichtung (24) **dadurch gekennzeichnet, dass** die Freilaufeinrichtung (24), die es ermöglicht, dass die Abtriebswelle (14) in einem blockierten Zustand über einen begrenzten Teil ihres Umfangs drehbar ist, wenigstens ein radial zur Abtriebswelle (14) zwischen der Abtriebswelle (14) und dem Ringkolben (22) angeordnetes Freilaufelement (28) umfasst, welches fest mit der Abtriebswelle (14) oder dem Ringkolben (22) verbunden ist und sich radial in wenigstens eine an dem Ringkolben (22) bzw. an der Antriebswelle (14) ausgebildete und sich über einen begrenzten Teil des Umfangs ausdehnende Aussparung (26) erstreckt.

2. Getriebeanordnung (10) nach Anspruch 1, **dadurch gekennzeichnet, dass** das wenigstens eine Freilaufelement (28) als Scheibe ausgebildet ist, wobei ein Teil der Scheibe radial in eine Aussparung (26) hineinragt und ein Teil der Scheibe fest mit der Abtriebswelle (14) oder dem Ringkolben (22) verbunden ist.

3. Getriebeanordnung (10) nach Anspruch 1 oder 2, **dadurch gekennzeichnet, dass** wenigstens drei Freilaufelemente (28) auf einem Außenumfang der Abtriebswelle (14) verteilt und entsprechend drei auf einem Innenumfang des Ringkolbens (22) ausgebildete Aussparungen (26) angeordnet sind.

4. Getriebeanordnung (10) nach einem der vorhergehenden Ansprüche, **dadurch gekennzeichnet, dass** der Ringkolben (22) als Bremskolben ausgebildet ist und mit einem mit dem Getriebegehäuse (12) verbundenen Bremselement (64) in Eingriff bringbar ist, wobei dann die Abtriebswelle (14) gegenüber dem Getriebegehäuse (12) blockierbar ist.

5. Getriebeanordnung (10) nach einem der vorhergehenden Ansprüche, **dadurch gekennzeichnet, dass** der Ringkolben (22) als Kupplungskolben ausgebildet und mit einem mit der Kupplung (18) verbundenen Kupplungselement (56) in Eingriff bringbar ist, um die Abtriebswelle (14) mit der Antriebskomponente (16) antriebsmäßig zu verbinden bzw. zu kuppeln.

6. Getriebeanordnung (10) nach Anspruch 4 oder 5, **dadurch gekennzeichnet, dass** zwischen Ringkolben (22) und Abtriebswelle (14) wenigstens ein Federelement (54) angeordnet ist, welches den Ringkolben (22) gegen das Bremselement (64) vorspannt.

7. Getriebeanordnung (10) nach Anspruch 5 oder 6, **dadurch gekennzeichnet, dass** an dem Ringkolben (22) eine Hydraulikkammer (52) ausgebildet ist, derart, dass durch Druckbeaufschlagung der Hydraulikkammer (52) der Ringkolben (22) axial verschiebbar ist.

## Claims

1. Transmission arrangement (10), particularly for a power take-off transmission, comprising a transmission housing (12), an output shaft (14) for driving an implement, a drive component (16) for driving the output shaft (14), a clutch (18) arranged between the output shaft (14) and the drive component (16) for transmitting a torque, a brake device (20) for braking or locking the output shaft (14) in relation to the transmission housing (12), an annular piston (22) which is supported so that it is axially displaceable on the output shaft (14) and which in a first position serves to actuate the clutch (18) and in a second position actuates the brake device (20), and a freewheel device (24), **characterized in that** the freewheel device (24), which allows the output shaft (14) to be rotated over a limited part of its circumference whilst in its locked state, comprises at least one freewheel element (28), which is arranged radially in relation to the output shaft (14) between the output shaft (14) and the annular piston (22) and which is firmly connected to the output shaft (14) or to the annular piston (22) and extends radially into at least one recess (26), formed on the annular piston (22) and/or on the drive shaft (14) and extending over a limited part of the circumference.

2. Transmission arrangement (10) according to Claim 1, **characterized in that** the at least one freewheel element (28) is embodied as a disk, a part of the disk projecting radially into a recess (26) and a part of the disk being firmly connected to the output shaft (14) or to the annular piston (22).

3. Transmission arrangement (10) according to Claim 1 or 2, **characterized in that** at least three freewheel elements (28) are distributed over an outer circumference of the output shaft (14), and three recesses (26) are accordingly formed on an inner circumference of the annular piston (22).

4. Transmission arrangement (10) according to one of the preceding claims, **characterized in that** the annular piston (22) is embodied as a brake piston and can be brought into engagement with a brake element (64) connected to the transmission housing (12), the output shaft (14) then being lockable in relation to the transmission housing (12).

5. Transmission arrangement (10) according to one of the preceding claims, **characterized in that** the annular piston (22) is embodied as a clutch piston and can be brought into engagement with a clutch element (56) connected to the clutch (18), in order to drive-connect or to couple the output shaft (14) to the drive component (16).

6. Transmission arrangement (10) according to Claim 4 or 5, **characterized in that** at least one spring element (54), which serves to bias the annular piston (22) towards the brake element (64), is arranged between the annular piston (22) and the output shaft (14).

7. Transmission arrangement (10) according to Claim 5 or 6, **characterized in that** a hydraulic chamber (52) is formed on the annular piston (22), in such a way that under pressurization of the hydraulic chamber (52) the annular piston (22) is axially displaceable.

## Revendications

1. Agencement de boîte de vitesses (10), notamment pour une boîte de vitesses d'arbre de prise de mouvement, avec un carter de boîte de vitesses (12), un arbre d'entraînement en sortie (14) pour entraîner en entrée un appareil, un composant d'entraînement en entrée (16) pour entraîner en entrée l'arbre d'entraînement en sortie (14), un embrayage (18) placé entre l'arbre d'entraînement en sortie (14) et le composant d'entraînement en entrée (16) disposé pour transmettre un couple de rotation, un dispositif de freinage (20) pour freiner et/ou bloquer l'arbre d'entraînement en sortie (14) par rapport au carter de boîte de vitesses (12), un piston annulaire (22) disposé sur l'arbre d'entraînement en sortie (14) de façon à pouvoir être déplacé dans le plan axial et à l'aide duquel l'embrayage (18) peut être actionné dans une première position, le dispositif de freinage (20) pouvant être actionné dans une deuxième position ainsi qu'un dispositif de roue libre (24), **caractérisé en ce que** le dispositif de roue libre (24) permet que l'arbre d'entraînement en sortie (14) puisse être tourné dans un état bloqué au-delà d'une partie délimitée de sa périphérie qui comprend au moins un élément de roue libre (28) disposé dans le plan radial par rapport à l'arbre d'entraînement en sortie (14), entre l'arbre d'entraînement en sortie (14) et le piston annulaire (22), ledit élément étant relié fixement à l'arbre d'entraînement en sortie (14) ou au piston annulaire (22) et s'étendant dans le plan radial dans au moins un évidement (26) réalisé au niveau du piston annulaire (22) et/ou de l'arbre d'entraînement en entrée (14) et s'étendant au-delà d'une partie délimitée de sa périphérie.

2. Agencement de boîte de vitesses (10) selon la revendication 1, **caractérisé en ce que** l'au moins un élément de roue libre (28) prend la forme d'un disque, une partie du disque saillant dans le plan radial dans un évidement (26) et une partie du disque étant reliée fixement à l'arbre d'entraînement en sortie (14) ou au piston annulaire (22).

3. Agencement de boîte de vitesses (10) selon la revendication 1 ou 2, **caractérisé en ce qu'**au moins trois éléments de roue libre (28) sont disposés sur un périmètre extérieur de l'arbre d'entraînement en sortie (14) de façon répartie et de façon à correspondre à trois évidements (26) réalisés sur un périmètre intérieur du piston annuaire (22).

4. Agencement de boîte de vitesses (10) selon l'une quelconque des revendications précédentes, **caractérisé en ce que** le piston annulaire (22) prend la forme d'un piston de frein et peut être mis en prise avec un élément de freinage (64) relié au carter de boîte de vitesses (12), l'arbre d'entraînement en sortie (14) pouvant alors être bloqué par rapport au carter de boîte de vitesses (12).

5. Agencement de boîte de vitesses (10) selon l'une quelconque des revendications précédentes, **caractérisé en ce que** le piston annulaire (22) prend la forme d'un piston d'embrayage et peut être mis en prise avec l'élément d'embrayage (56) relié à l'embrayage (18) en vue de relier ou de coupler l'arbre d'entraînement en sortie (14) au composant d'entraînement en entrée (16) de façon à permettre un entraînement en entrée.

6. Agencement de boîte de vitesses (10) selon la revendication 4 ou 5, **caractérisé en ce qu'**au moins un élément de ressort (54) est disposé entre le piston annulaire (22) et l'arbre d'entraînement en sortie (14), ledit élément de ressort précontraignant le piston annulaire (22) contre l'élément de freinage (64).

7. Agencement de boîte de vitesses (10) selon la revendication 5 ou 6, **caractérisé en ce qu'**un compartiment hydraulique (52) est réalisé au niveau du piston annulaire (22) de façon à pouvoir déplacer le piston annulaire (22) dans le plan axial lorsque le compartiment hydraulique (52) est mis sous pression.
